# EUROPEAN PATENT APPLICATION

(11) **EP 4 243 176 A1**
(43) Date of publication of application: **13.09.2023**
(21) Application number: 21888046.6
(22) Date of filing: 25.04.2021
(51) Int. Cl.: H01M 50/342, H01M 50/30, H01M 50/109

(54) **BATTERY HOUSING STRUCTURE AND BUTTON BATTERY**

(30) Priority: 09.11.2020 CN 202011237620
(71) Applicant: Shenzhen Hynetech Company Limited, Shenzhen, Guangdong 518000 (CN)
(72) Inventor: HU, Jiangbo, Shenzhen, Guangdong 518000 (CN); CAO, Zhifeng, Shenzhen, Guangdong 518000 (CN)
(74) Representative: Sackin, Robert
(86) International application number: PCT/CN2021/089639
(87) International publication number: WO 2022/095342

(57) **Abstract**

A battery housing structure and a button battery. The battery housing structure comprises an upper cover (200) and a bottom housing (100); the bottom housing (100) mates with the upper cover (200) to form a sealing cavity; the sealing cavity is used for mounting of a cell assembly (400); the bottom housing (100) is provided with a first blind groove (1311). The button battery comprises the cell assembly (400) and the battery housing structure, and the cell assembly (400) is provided in the sealing cavity. In the battery housing structure, the upper cover (200) mates with the bottom housing (100) to form the sealing cavity to provide a mounting space for the cell assembly (400); moreover, the first blind groove (1311) is provided on the bottom housing (100); due to the first blind groove (1311), the wall of the area where the first blind groove (1311) is located is thinner than the wall in other areas, and therefore can be broken first under the action of high-pressure gas when the battery fails or is scrapped, so as to form a pressure releasing opening to avoid the explosion of the battery due to incapability of releasing the high-pressure gas, thereby ensuring the safety. The button battery comprises the battery housing structure, and can realize pressure relief and explosion prevention by using the first blind groove (1311), thereby ensuring the safety.

## Description

### TECHNICAL FIELD

The present application relates to the technical field of battery safety, in particular to a battery hosing structure and a button battery.

### BACKGROUND

A button cell, also generally called a button battery, refers to a type of battery with a shape similar to a button, and is thinner than a cylindrical battery. Button cells are widely used in various miniature electronic products due to their small size.

A conventional button cell includes a bottom case, an upper cover, and a cell assembly. The bottom case and the upper cover cooperate to form a sealing cavity, and the cell assembly is mounted in the sealing cavity. However, when the cell fails or is scrapped, due to an abnormality of the cell assembly in the sealing cavity, if there is no normal explosion-proof way, the energy in the sealing cavity cannot be released. In this case, it is easy to cause an explosion, or even more serious situations.

### SUMMARY

Based on this, it is necessary to provide a battery housing structure and a button battery. The battery housing structure can be broken to release pressure when the battery fails or is scrapped through the arrangement of a first blind groove, so as to play an explosion-proof effect, thereby ensuring safety. The button battery adopts the aforementioned battery housing structure, which can use the first blind groove for pressure releasing and explosion-proof to ensure safety.

The technical solutions are as follows.

In an embodiment, a battery housing structure is provided, including:
an upper cover; and
a bottom case, the bottom case cooperating with the upper cover to form a sealing cavity, the sealing cavity being configured for a cell assembly to be mounted therein, and the bottom case being provided with a first blind groove.

In the aforementioned battery housing structure, the upper cover and the bottom case can cooperate to form the sealing cavity to provide a mounting space for the cell assembly, and the bottom case is provided with the first blind groove. Due to the opening of the first blind groove, a wall thickness of an area where the first blind groove is located is thinner than that of other areas. Therefore, when the battery fails or is scrapped, it can be broken first under an action of high-pressure gas, thereby forming a pressure releasing opening to prevent the battery from exploding due to unable release of the high-pressure gas, thereby ensuring safety.

The technical solutions are further described below.

In one of the embodiments, the first blind groove is arranged in an arc shape, or the first blind groove is arranged in a straight-line shape.

In one of the embodiments, the bottom case includes a first bottom wall, a first side wall, and a first sealing edge. The first side wall is arranged in an annular shape, and the first side wall is connected around a circumference of the first bottom wall. The first sealing edge is arranged in an annular shape and corresponds to the first side wall, the first sealing edge is connected to the first side wall, and the first sealing edge is located at an end of the first side wall away from the first bottom wall. The first blind groove is opened on the first sealing edge.

In one of the embodiments, the first blind groove is opened around a circumference of the first sealing edge to form a non-annular groove; or the first blind groove is opened around a circumference of the first sealing edge to form an annular groove.

In one of the embodiments, the first sealing edge includes a first extending edge and a second extending edge, both the first extending edge and the second extending edge are arranged in an annular shaped. One end of the first extending edge is connected to the first side wall, the other end of the first extending edge is connected to the second extending edge, and the first extending edge is located between the first side wall and the second extending edge. The first blind groove is opened around a circumference of the first extending edge, and the second extending edge abuts against the upper cover.

In one of the embodiments, the first extending edge has an inner ring end and an outer ring end. The first extending edge is connected to the first side wall through the inner ring end, and the first extending edge is extended from the first side wall toward an outer ring of the first side wall. The second extending edge is connected to the outer ring end to enable the second extending edge to be connected to the first extending edge, and the second extending edge is extended from the first extending edge in a direction away from the first bottom wall.

In one of the embodiments, a distance between the first blind groove and the inner ring end is a first distance, a distance between the first blind groove and the outer ring end is a second distance, the first distance is less than or equal to the second distance.

In one of the embodiments, the first bottom wall is provided with a second blind groove, the second blind groove is arranged in an arc shape;

the second blind groove is opened on an outer wall of the first bottom wall, and the second blind groove is opened around the circumference of the first bottom wall.

In one of the embodiments, the first blind groove is opened on an outer wall of the first sealing edge; a cross-section of the first blind groove is rectangular, or a cross-section of the first blind groove is semicircular, or a cross-section of the first blind groove is triangular; the battery housing structure further includes a sealing ring, the sealing ring is disposed between an outer edge of the upper cover and the bottom case.

In another embodiment, a button battery is also provided, including:
a cell assembly; and
the battery housing structure according to any one of above technical solutions, the cell assembly being arranged in the sealing cavity.

In the aforementioned button battery, the upper cover and the bottom case can cooperate to form the sealing cavity to provide a mounting space for the cell assembly. Since the bottom case is provided with the first blind groove, a wall thickness of the area where the first blind groove is located is thinner than that of other areas. Therefore, when the battery fails or is scrapped, it can be broken first under an action of high-pressure gas, thereby forming a pressure releasing opening to prevent the battery from exploding due to unable release of the high-pressure gas, thereby ensuring safety.

### BRIEF DESCRIPTION OF THE DRAWINGS

The drawings constitute a part of the present application and are used to provide a further understanding of the present application. The exemplary embodiments of the present application and their descriptions are used to explain the present application and do not constitute an improper limitation of the present application.

In order to more clearly explain the embodiments of the present application or the technical solutions in the prior art, the following will briefly introduce the drawings that need to be used in the description of the embodiments or the prior art. It is obvious that the drawings in the following description are only the embodiments of the present application. For those skilled in the art, other drawings can be obtained according to the disclosed drawings without paying creative labor.

Furthermore, the drawings are not drawn to a 1:1 scale and the relative dimensions of elements are drawn in the drawings by way of example only and not necessarily drawn to true scale.
FIG. 1 is a schematic cross-sectional view of an overall structure of a button battery in an embodiment.
FIG. 2 is a cross-sectional view of a bottom case, an upper cover, and a sealing ring that are assembled in the embodiment of FIG. 1.
FIG. 3 is a top view of a rear structure of the bottom case in an embodiment.
FIG. 4 is a schematic cross-sectional view of the bottom case in the embodiment of FIG. 3.
FIG. 5 is a partial enlarged view of a first blind groove and a second blind groove on the bottom case in the embodiment of FIG. 4.
FIG. 6 is a top view of a rear structure of a bottom case in another embodiment.
FIG. 7 is a schematic cross-sectional view of the bottom case in the embodiment of FIG. 6.

### Description of reference numbers:

100, bottom case; 110, first bottom wall; 111, second blind groove; 120, first side wall; 130, first sealing edge; 131, first extending edge; 1311, first blind groove; 132, second extending edge; 200, upper cover; 300, sealing ring; 400, cell assembly.

### DETAILED DESCRIPTION OF THE EMBODIMENTS

The present application will now be described in detail with reference to the accompanying drawings.

In order to make the above objects, features and advantages of the present application more obvious and easier to understand, the specific embodiments of the present application are described in detail below in combination with the accompanying drawings. Many specific details are set forth in the following description to facilitate a full understanding of the invention. However, the present application can be implemented in many ways different from those described herein, and those skilled in the art can make similar improvements without violating the connotation of the invention. Therefore, the invention is not limited by the specific embodiments disclosed below.

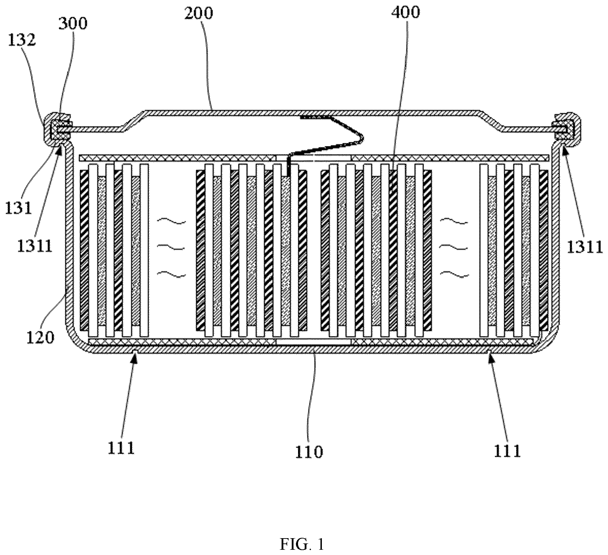

Referring to FIGS. 1 to 7, in an embodiment, a battery housing structure is provided, including an upper cover 200 and a bottom case 100.

In the embodiment shown in FIG. 1, the upper cover 200 is a circular cover body, a middle of the upper cover 200 is provided with a circular arch portion, and the circular arch portion is protruded or arched toward an outer side of the upper cover 200. The bottom case 100 is provided with an accommodating cavity configured to accommodate a cell assembly 400. After an upper edge of the bottom case 100 and an outer edge of the upper cover 200 are sealingly assembled, a sealing cavity is formed between the upper cover 200 and the bottom case 100, and the cell assembly 400 is mounted in the sealing cavity.

In an embodiment, referring to FIG. 1, the bottom case 100 cooperates with the upper cover 200 to form a sealing cavity configured for the cell assembly 400 to be mounted therein, and the bottom case 100 is provided with a first blind groove 1311.

In the embodiment shown in FIG. 1 to FIG. 7, the bottom case 100 is provided with the first blind groove 1311, the first blind groove 1311 is a non-penetrating groove structure. Due to the non-penetrating, a wall thickness of a grooved area of the first blind groove 1311 is thinner than that of a non-grooved area, thereby forming a weak area.

When the battery fails or is scrapped, a high-pressure gas supports and presses a shell wall of the bottom case 100. Under this supporting and pressing action, the weak area corresponding to the first blind groove 1311 is more likely to be broken first under the action of the high-pressure gas than the non-grooved area. After breaking, the first blind groove 1311 becomes a hole extending though the shell wall, thereby becoming a pressure releasing hole. The high-pressure gas is released through the pressure releasing hole, so as to prevent the high-pressure gas from breaking the battery housing structure after reaching a certain level and causing an explosion, thereby playing an explosion-proof role and ensuring safety.

In the battery housing structure, the upper cover 200 and the bottom case 100 can cooperate to form the sealing cavity to provide a mounting space for the battery cell assembly 400, and the bottom case 100 is provided with the first blind groove 1311. Due to the opening of the first blind groove 1311, the wall thickness of the area where the first blind groove 1311 is located is thinner than that of other areas. Therefore, when the battery fails or is scrapped, it can be broken first under the action of the high-pressure gas, thereby forming a pressure releasing opening to prevent the battery from exploding due to unable release of the high-pressure gas, thereby ensuring safety.

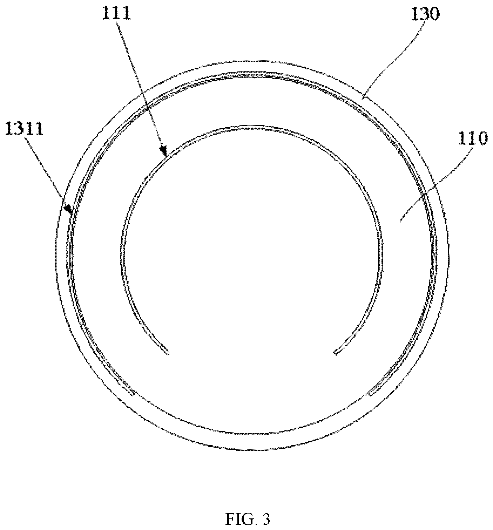

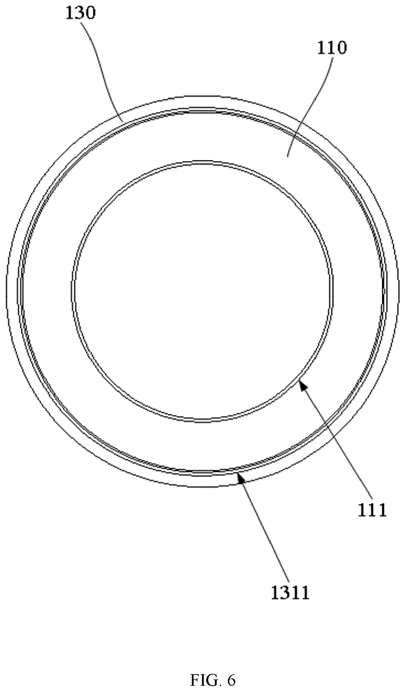

In one embodiment, referring to FIG. 3 and FIG. 6, the first blind groove 1311 is arranged in an arc shape.

In another embodiment, the first blind groove 1311 is arranged in a straight-line shape.

The routing of the first blind groove 1311 is an arc or a straight line, so that it can be stretched under the action of high-pressure gas and further torn under the action of high-pressure gas after being stretched to form a pressure releasing gap, thereby improving a pressure releasing efficiency and a pressure releasing capability. It can respond quickly in the shortest time and provide a reliable pressure releasing path to avoid explosion and ensure safety.

In one embodiment, referring to FIG. 1, FIG. 4, FIG. 5, and FIG. 7, the bottom case 100 includes a first bottom wall 110, a first side wall 120, and a first sealing edge 130. The first side wall 120 is arranged in an annular shape, and the first side wall 120 is connected around a circumference of the first bottom wall 110. The first sealing edge 130 is arranged in an annular shape and corresponds to the first side wall 120. The first sealing edge 130 is connected to the first side wall 120, and the first sealing edge 130 is located on an end of the first side wall 120 away from the first bottom wall 110. The first blind groove 1311 is opened on the first sealing edge 130.

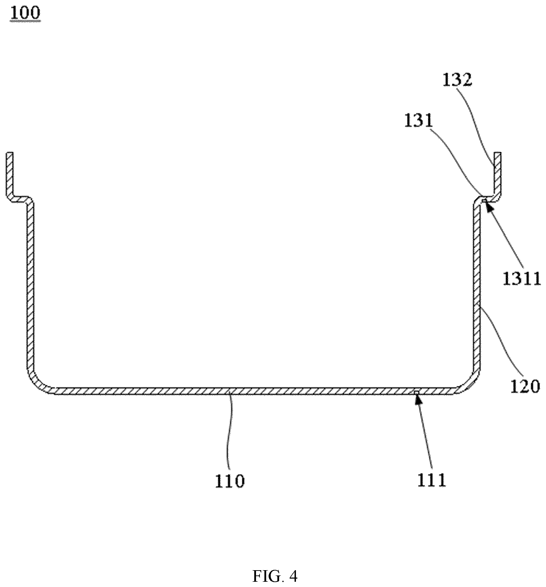

Optionally, as shown in the embodiment shown in FIG. 4 and in combination with the embodiment shown in FIG. 3, the first bottom wall 110 is a circular plate, and the first side wall 120 is a ring structure surrounding the first bottom wall 110. The first side wall 120 and the first bottom wall 110 may be integrally formed. The first sealing edge 130 is arranged in an annular shape, and the first sealing edge 130 is disposed corresponding to the first side wall 120. A lower end of the first sealing edge 130 can be integrally connected to an upper end of the first side wall 120. An outer portion of the first sealing edge 130 is configured to abut against and match with an outer edge of the upper cover 200.

In one embodiment, referring to FIG. 3 and FIG. 4, the first blind groove 1311 is opened around a circumference of the first sealing edge 130 to form a non-annular groove.

In the embodiment shown in FIG. 3 and FIG. 4, the first blind groove 1311 is an arc-shaped groove opened along the circumference of the first sealing edge 130, and the first blind groove 1311 is not opened around the entire circumference of the first sealing edge 130.

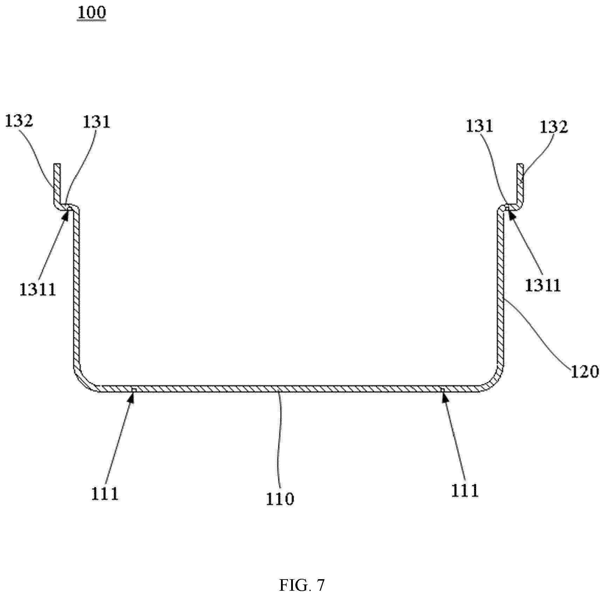

In another embodiment, referring to FIG. 6 and FIG. 7, the first blind groove 1311 is opened around the circumference of the first sealing edge 130 to form an annular groove.

In the embodiment shown in FIG. 6 and FIG. 7, the first blind groove 1311 is opened around the entire circumference of the first sealing edge 130 to form an annular groove.

In this way, after the high-pressure gas stretches a part of the first blind groove 1311, under the further action of the high-pressure gas, the entire first blind groove 1311 can be completely torn, so that the upper cover 200 is substantially separated from the bottom case 100, so that the high-pressure gas can be directly released, avoiding the explosion caused by a slow release of the high-pressure gas.

In one embodiment, referring to FIG. 1, FIG. 2, FIG. 4, and FIG. 5, the first sealing edge sealing 130 includes a first extending edge 131 and a second extending edge 132, both the first extending edge 131 and the second extending edge 132 are arranged in an annular shape. One end of the first extending edge 131 is connected to the first side wall 120, the other end of the first extending edge 131 is connected to the second extending edge 132, and the first extending edge 131 is located between the first side wall 120 and the second extending edge 132. The first blind groove 1311 is opened around a circumference of the first extending edge 131, and the second extending edge 132 abuts against the upper cover 200.

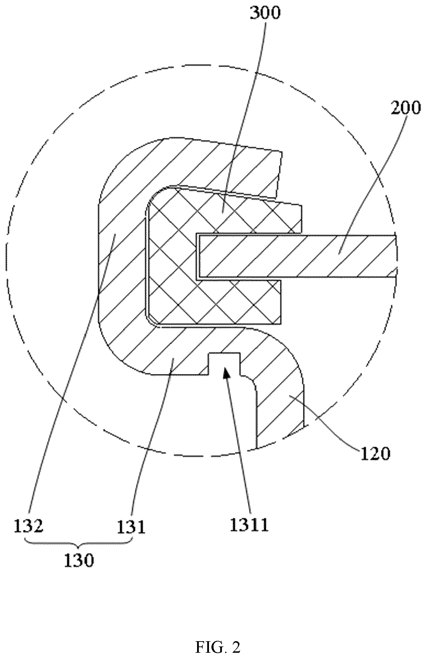

In the embodiment shown in FIG. 2, the first sealing edge 130 is provided with the first extending edge 131 and the second extending edge 132, a first groove is opened on the first extending edge 131, and it can be seen from FIG. 3 and FIG. 6 that, the first groove is opened around the circumference of the first extending edge 131.

In the embodiment shown in FIG. 2, an outer edge of the second extending edge 132 is bent toward an inner side thereof (that is, the inner side of the annular structure of the second extending edge 132), and abuts against and matches with an upper surface of the outer edge of the upper cover 200. The other portions of the second extending edge 132 abut against and matches with an end surface of the outer edge of the upper cover 200. An upper side of the first extending edge 131 abuts against and matches with a lower surface of the outer edge of the upper cover 200. Of course, in the embodiment shown in FIG. 2, a sealing ring 300 is further provided between the bottom case 100 and the upper cover 200. The sealing ring 300 may substantially correspond to the first extending edge 131 and the second extending edge 132. That is, the outer edge of the upper cover 200 is wrapped by the sealing ring 300, and the sealing ring 300 is located between the outer edge of the upper cover 200 and the first sealing edge 130, which is not repeated here.

In the embodiment shown in FIG. 2, the first blind groove 1311 is opened on the first extending edge 131. Since the first extending edge 131 is connected to the first side wall 120, that is, the first blind groove 1311 opened on the first extending edge 131 is closer to the sealing cavity than if the first blind groove 1311 were opened on the second extending edge 132, when the high-pressure gas in the sealing cavity presses the bottom case 100, the first blind groove 1311 adjacent to the sealing cavity can be quickly broken under the action of the high-pressure gas to release pressure, thereby preventing explosion and ensuring safety.

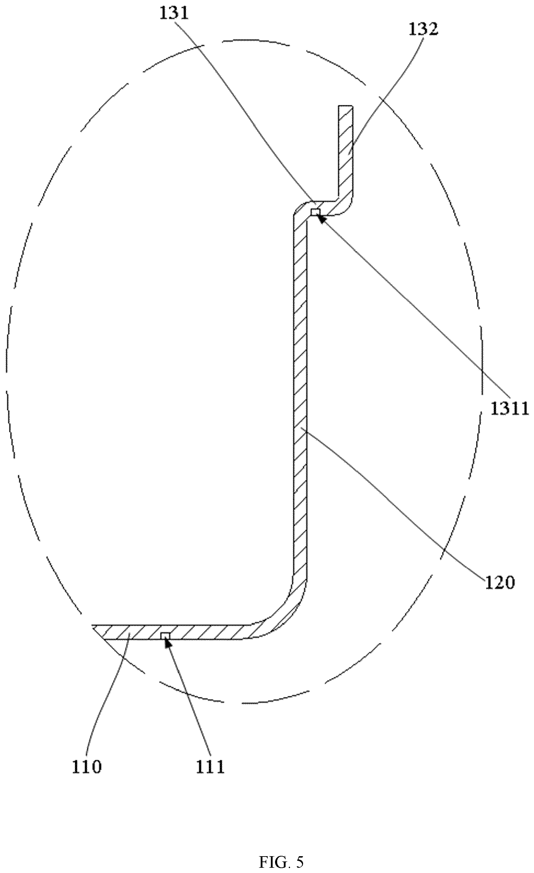

In one embodiment, referring to FIG. 5, the first extending edge 131 has an inner ring end and an outer ring end.

Optionally, the first extending edge 131 has a horizontally annular plate structure. In the embodiment shown in a partial enlarged view of FIG. 5, the inner ring end is located at a left side of the first extending edge 131, the outer ring end is located at the outer side of the first extending edge 131.

In one embodiment, referring to FIG. 5, the first extending edge 131 is connected to the first side wall 120 through the inner ring end, and the first extending edge 131 is extended from the first side wall 120 toward an outer ring of the first side wall 120.

In one embodiment, referring to FIG. 5, the second extending edge 132 is connected to the outer ring end, so that the second extending edge 132 is connected to the first extending edge 131, and the second extending edge 132 is extended from the first extending edge 131 in a direction away from the first bottom wall 110.

In the embodiment shown in FIG. 5, the inner ring end of the first extending edge 131 is integrally connected to the upper end of the first side wall 120, and the outer ring end of the first extending edge 131 is integrally connected to the lower end of the second extending edge 132. The second extending edge 132 has a vertically annular structure.

In one embodiment, referring to FIG. 5, a distance between the first blind groove 1311 and the inner ring end is a first distance, a distance between the first blind groove 1311 and the outer ring end is a second distance, the first distance is less than or equal to the second distance.

In the embodiment shown in FIG. 5, the distance between the first blind groove 1311 and the inner ring end is less than the distance between the first blind groove 1311 and the outer ring end. That is, the first blind groove 1311 is disposed adjacent to the inner ring end. A purpose of this configuration is to enable the first blind groove 1311 to be adj acent to the sealing cavity, so that the high-pressure gas can quickly act on and break the first blind groove 1311, so that the pressure is released through the broken first blind groove 1311, which plays the explosion-proof effect and ensures safety.

In the embodiment shown in FIG. 2, a part of the sealing ring 300 is sandwiched between the outer edge of the upper cover 200 and the first extending edge 131. In this case, the high-pressure gas first squeezes the sealing ring 300, a gap is formed between the sealing ring 300 and the first extending edge 131 (i.e., the bottom case 100) when the sealing ring 300 is squeezed. The high-pressure gas contacts the weak area formed by the first blind groove 1311 through the gap, so as to quickly break the first blind groove 1311 to form the pressure releasing opening, and the high-pressure gas is released, thereby preventing the battery from exploding and ensuring safety.

When the first blind groove 1311 is opened adjacent to the inner ring end of the first extending edge 131, the high-pressure gas can contact the weak area more quickly, thereby quickly breaking the first blind groove 1311 to form the pressure releasing opening, thereby releasing the high-pressure gas to avoid battery explosion and ensure safety.

In one embodiment, referring to FIG. 1 to FIG. 7, the first bottom wall 110 is provided with a second blind groove 111, and the second blind groove 111 is arranged in an arc shape.

In one embodiment, referring to FIG. 3 and FIG. 6, the second blind groove 111 is opened on an outer wall of the first bottom wall 110, and the second blind groove 111 is opened around the circumference of the first bottom wall 110.

In the embodiment shown in FIG. 3, the second blind groove 111 is opened on the outer wall of the first bottom wall 110, and the second blind groove 111 is a non-annular groove that is opened only around a part of the circumference.

In the embodiment shown in FIG. 6, the second blind groove 111 is opened on the outer wall of the first bottom wall 110, and the second blind groove 111 is an annular groove opened around the entire circumference.

It should be noted that:
The second blind groove 111 is spaced apart from an edge of the first bottom wall 110. In the embodiment shown in FIG. 3 and FIG. 6, the second blind groove 111 is provided at a position with a certain distance from the edge of the first bottom wall 110.

In one embodiment, referring to FIG. 1 to FIG. 7, the first blind groove 1311 is opened on the outer wall of the first sealing edge 130.

In one embodiment, a cross-section of the first blind groove 1311 is rectangular.

In another embodiment, the cross-section of the first blind groove 1311 is semicircular.

In another embodiment, the cross-section of the first blind groove 1311 is triangular.

In one embodiment, referring to FIG. 1 and FIG. 2, the battery housing structure further includes the sealing ring 300, the sealing ring 300 is disposed between the outer edge of the upper cover 200 and the bottom case 100.

In the embodiment shown in FIGS. 1 and 2, the sealing ring 300 is sandwiched between the outer edge of the upper cover 200 and the first sealing edge 130.

Further, the sealing ring 300 is made of elastic material.

Optionally, the sealing ring 300 is a rubber ring.

Referring to FIG. 1, in an embodiment, a button battery is further provided, including a cell assembly 400 and the battery housing structure described in any one of the above embodiments. The battery cell assembly 400 is disposed in the sealing cavity.

In the aforementioned button battery, the upper cover 200 and the bottom case 100 cooperate to form the sealing cavity to provide a mounting space for the cell assembly 400. Since the bottom case 100 is provided with the first blind groove 1311, a wall thickness of the area where the first blind groove 1311 is located is thinner than that of other areas. Therefore, when the battery fails or is scrapped, it can be broken first under an action of high-pressure gas, thereby forming a pressure releasing opening to prevent the battery from exploding due to unable release of the high-pressure gas, thereby ensuring safety.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which is only for the convenience of describing the present application and simplifying the description, rather than indicating or implying that the device or element must have a specific azimuth, be constructed and operated in a specific azimuth, so it cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "multiple" means at least two, such as two, three, etc., unless otherwise expressly and specifically defined.

In the present application, unless otherwise expressly specified and limited, the terms "install", "connect", "contact", "fix" and other terms should be understood in a broad sense, for example, they can be fixed connections, removable connections, or integrated. It can be mechanical connection or electrical connection. It can be directly connected or indirectly connected through an intermediate medium. It can be the connection within two elements or the interaction relationship between two elements, unless otherwise expressly limited. For those skilled in the art, the specific meaning of the above terms in the present application can be understood according to the specific situation.

In the present application, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "disposed on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

The technical features of the above embodiments can be combined arbitrarily. For the sake of brevity, all possible combinations of the technical features in the above embodiments are not described. However, as long as there is no contradiction in the combination of these technical features, it should be considered as the scope of this description.

The foregoing descriptions are merely specific embodiments of the present application, but are not intended to limit the protection scope of the present application. It should be pointed out that any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A battery housing structure, comprising:
an upper cover; and
a bottom case, wherein the bottom case cooperates with the upper cover to form a sealing cavity, the sealing cavity is configured for a cell assembly to be mounted therein, the bottom case is provided with a first blind groove.

2. The battery housing structure according to claim 1, wherein the first blind groove is arranged in an arc shape; or the first blind groove is arranged in a straight-line shape.

3. The battery housing structure according to claim 2, wherein the bottom case comprises a first bottom wall, a first side wall, and a first sealing edge; the first side wall is arranged in an annular shape, the first side wall is connected around a circumference of the first bottom wall; the first sealing edge is arranged in an annular shape and corresponds to the first side wall, the first sealing edge is connected to the first side wall, and the first sealing edge is located at an end of the first side wall away from the first bottom wall, the first blind groove is opened on the first sealing edge.

4. The battery housing structure according to claim 3, wherein the first blind groove is opened around a circumference of the first sealing edge to form a non-annular groove; or
the first blind groove is opened around a circumference of the first sealing edge to form an annular groove.

5. The battery housing structure according to claim 4, wherein the first sealing edge comprises a first extending edge and a second extending edge, both the first extending edge and the second extending edge are arranged in an annular shaped; one end of the first extending edge is connected to the first side wall, the other end of the first extending edge is connected to the second extending edge, and the first extending edge is located between the first side wall and the second extending edge, the first blind groove is opened around a circumference of the first extending edge, the second extending edge abuts against the upper cover.

6. The battery housing structure according to claim 5, wherein the first extending edge has an inner ring end and an outer ring end, the first extending edge is connected to the first side wall through the inner ring end, the first extending edge is extended from the first side wall toward an outer ring of the first side wall, the second extending edge is connected to the outer ring end to enable the second extending edge to be connected to the first extending edge, and the second extending edge is extended from the first extending edge in a direction away from the first bottom wall.

7. The battery housing structure according to claim 6, wherein a distance between the first blind groove and the inner ring end is a first distance, a distance between the first blind groove and the outer ring end is a second distance, the first distance is less than or equal to the second distance.

8. The battery housing structure according to claim 3, wherein the first bottom wall is provided with a second blind groove, the second blind groove is arranged in an arc shape;
wherein the second blind groove is opened on an outer wall of the first bottom wall, and the second blind groove is opened around the circumference of the first bottom wall.

9. The battery housing structure according to any one of claims 1 to 8, wherein the first blind groove is opened on an outer wall of the first sealing edge;
wherein a cross-section of the first blind groove is rectangular, or a cross-section of the first blind groove is semicircular, or a cross-section of the first blind groove is triangular;
the battery housing structure further comprises a sealing ring, the sealing ring is disposed between an outer edge of the upper cover and the bottom case.

10. A button battery, comprising:
a cell assembly; and
the battery housing structure according to any one of claims 1 to 9, wherein the cell assembly is arranged in the sealing cavity.
